Europäisches Patentamt

European Patent Office

Office européen des brevets

(19)

(11) Veröffentlichungsnummer : **0 058 862**
**B1**

(12) **EUROPÄISCHE PATENTSCHRIFT**

(45) Veröffentlichungstag der Patentschrift :
**15.08.84**

(21) Anmeldenummer : **82100889.3**

(22) Anmeldetag : **08.02.82**

(51) Int. Cl.³ : **F 16 D 15/00**, F 16 D 3/22,
F 16 D 47/02

(54) **Ein- und ausrückbare Sperrkugelkupplung, insbesondere für Handkurbelgetriebe.**

(30) Priorität : **19.02.81 DE 3106094**

(43) Veröffentlichungstag der Anmeldung :
**01.09.82 Patentblatt 82/35**

(45) Bekanntmachung des Hinweises auf die Patenterteilung : **15.08.84 Patentblatt 84/33**

(84) Benannte Vertragsstaaten :
**AT BE CH DE FR**

(56) Entgegenhaltungen :
**CH-A- 379 207**
**DE-B- 1 146 709**
**DE-C- 102 396**
**FR-A- 754 883**
**GB-A- 148 251**
**GB-A- 329 900**
**GB-A- 872 404**
**GB-A- 1 212 658**

(73) Patentinhaber : **Haake, Werner**
**Eschlohn 24**
**D-4286 Südlohn (DE)**

(72) Erfinder : **Haake, Werner**
**Eschlohn 24**
**D-4286 Südlohn (DE)**

(74) Vertreter : **Habbel, Hans-Georg, Dipl.-Ing.**
**Postfach 3429 Am Kanonengraben 11**
**D-4400 Münster (DE)**

EP 0 058 862 B1

## Beschreibung

Die Erfindung bezieht sich auf eine ein- und ausrückbare Sperrkugelkupplung, insbesondere für Handkurbelgetriebe für motorische Antriebe von Toren, Rolladen oder Deckengliedertoren mit einer gegen Federdruck axial verschiebbaren treibenden Welle, mit einer mit der treibenden Welle fest verbundenen topfartigen äußeren Kupplungshälfte, in die eine mit einer getriebenen Welle drehfest verbundene innere Kupplungshälfte eingeschoben ist, wobei die äußere Kupplungshälfte über einen Teil der axialen Länge ihrer Innenwandung eine Innenverzahnung aufweist, in welche in eingerücktem Zustand Kugeln eines mit der inneren Kupplungshälfte axial- und drehfest verbundenen Kugellagers eingreifen und wobei in ausgerücktem Zustand die Kugeln mit einer neben der Innenverzahnung angeordneten zylindrischen Lauffläche der äußeren Kupplungshälfte zusammenwirken.

Eine gattungsgemäße Kupplungsvorrichtung wir in der DE-C-102 396 beschrieben. Bei dieser bekannten Einrichtung verschieben sich zwei zylindrische Bauteile ineinander, wodurch die innere und äußere Kupplungshälfte entweder in Eingriff miteinander gebracht werden können oder ein Leerlauf bedingt wird. Abwinkelungen der Kupplungshälften gegeneinander sind nicht möglich.

Aus der DE-B-11 46 709 bzw. der CH-A 379 207 sind Sperrkugelkupplungen bekannt, die zwar Abwinkelungen der äußeren und inneren Kupplungshälfte gegeneinander ermöglichen, aber die beiden Kupplungshälften sind nicht in eine Leerlaufstellung verbringbar, d. h. eine Stellung, in der keine wirksame Übertragung des Drehmomentes erfolgt.

Der Erfindung liegt die Aufgabe zugrunde, eine ein- und ausrückbare Sperrkugelkupplung zu schaffen, die einerseits eine einfache Verbindung zwischen der treibenden und der getriebenen Welle darstellt, andererseits aber auch Abwinkelungen zwischen diesen beiden Wellen ohne Schwierigkeiten ermöglicht.

Diese der Erfindung zugrundeliegende Aufgabe wird durch die Merkmale des kennzeichnenden Teiles des Hauptanspruches gelöst.

Durch diese Konstruktion kann z. B. eine Nothandkurbel geschaffen werden, die eine Verbindung mit der Motorachse im Bedarfsfall ermöglicht, kostengünstig hergestellt werden kann, wobei aber gleichzeitig Abwinkelungen zwischen den Kupplungshälften die einwandfreie Wirkungsweise der Kupplung nicht beeinträchtigen.

In den Unteransprüchen sind vorteilhafte Ausgestaltungen der Vorrichtung gemäß dem Hauptanspruch definiert.

Ein Ausführungsbeispiel wird nachfolgend anhand der Zeichnungen beschrieben. In den Zeichnungen zeigt

Figur 1 eine Ansicht teilweise geschnitten auf die Getriebeeinrichtung mit ein- und ausrückbarer Sperrkupplung und in

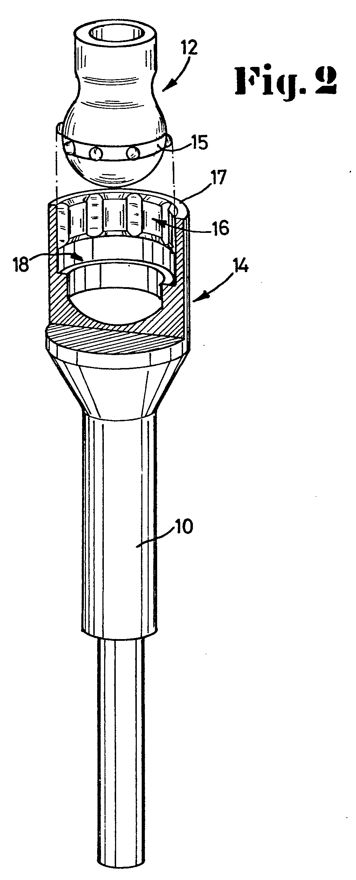

Figur 2 in etwas größerem Maßstab und in einer auseinandergezogenen Darstellungsweise die miteinander in Verbindung kommenden Kupplungsteile.

In den Zeichnungen ist mit 1 ein Gehäuse bezeichnet, das den Antriebsmotor für eine Rollade, ein Deckengliedertor oder ein Rolltor aufnimmt, wobei innerhalb dieses Gehäuses eine Getriebeanordnung untergebracht ist, von der bei 2 das von der eigentlichen, nicht erkennbaren Motorwelle angetriebene Zahnrad zu erkennen ist. Dieses Antriebszahnrad wirkt auf ein Übertragungszahnrad 3, das über eine Verbindungswelle 4 und ein auf dieser fest angeordnetes Schneckenrad 5 auf die eigentliche Arbeitswelle 6 wirkt.

Die Verbindungswelle 4 ist über das die Arbeitswelle 6 antreibende Schneckenrad 5 hinaus verlängert, so daß eine getriebene Welle 7 geschaffen wird, an deren Ende eine allgemein mit 8 bezeichnete Kupplung angeordnet ist. Bei 9 schließt eine Nothandkurbel an, die in der Zeichnung nicht dargestellt ist, wobei die Art des Anschlusses zum Stand der Technik gehört und daher nicht weiter erläutert werden muß. Auf dem zwischen der Anschlußstelle 9 für die Nothandkurbel und der Kupplung 8 befindlichen Wellenabschnitt 10 ist eine Feder 11 gelagert, so daß es möglich ist, die Anschlußstelle 9 für die Nothandkurbel gegen die Wirkung der Feder 11 nach unten zu bewegen.

Die eigentliche Kupplung besteht im wesentlichen aus einer mit der getriebenen Welle 7 fest verbundenen inneren Kupplungshälfte 12 und einer mit der Welle 10 fest verbundenen äußeren Kupplungshälfte 14.

Die innere Kupplungshälfte 12 ist an ihrer der äußeren Kupplungshälfte 14 zugewendeten Seite kugelförmig gestaltet und weist auf ihrem größten Durchmesserbereich einen Kugellagerring 15 auf, wobei es möglich ist, daß die Kugeln auf einem in einer entsprechenden Aufnahmenut drehfest in der Kupplungshälfte 12 vorgesehenen Ring gelagert sind, es ist aber in gleicher Weise möglich, die Kugeln auch unmittelbar in entsprechend zugeordneten Bohrungen der Kupplungshälfte 12 einzusetzen. Die kugelförmig gestaltete innere Kupplungshälfte 12 weist einen Außendurchmesser auf, der kleiner ist als der Innedurchmesser der Innenverzahnung 16, wobei die Kugeln des Kugellagers 15 über diesen Außendurchmesser vorstehen, so daß einerseits eine drehfeste Verbindung zwischen den beiden Kupplungshälften 12 und 14 möglich ist, andererseits aber Winkelverbindungen zwischen den Kupplungshälften 12 und 14 nicht behindert werden.

Die äußere Kupplungshälfte 14 weist in ihrem oberen Bereich eine Innenverzahnung 16 auf, die so gestaltet ist, daß sie sich beginnend an der Außenkante 17 nur über einen Teil der Höhe der Innenwandung erstreckt, so daß unterhalb des unteren Endes dieser Innenwandung erstreckt, so daß unterhalb des unteren Endes dieser Innenverzahnung eine Lauffläche 18 geschaffen wird.

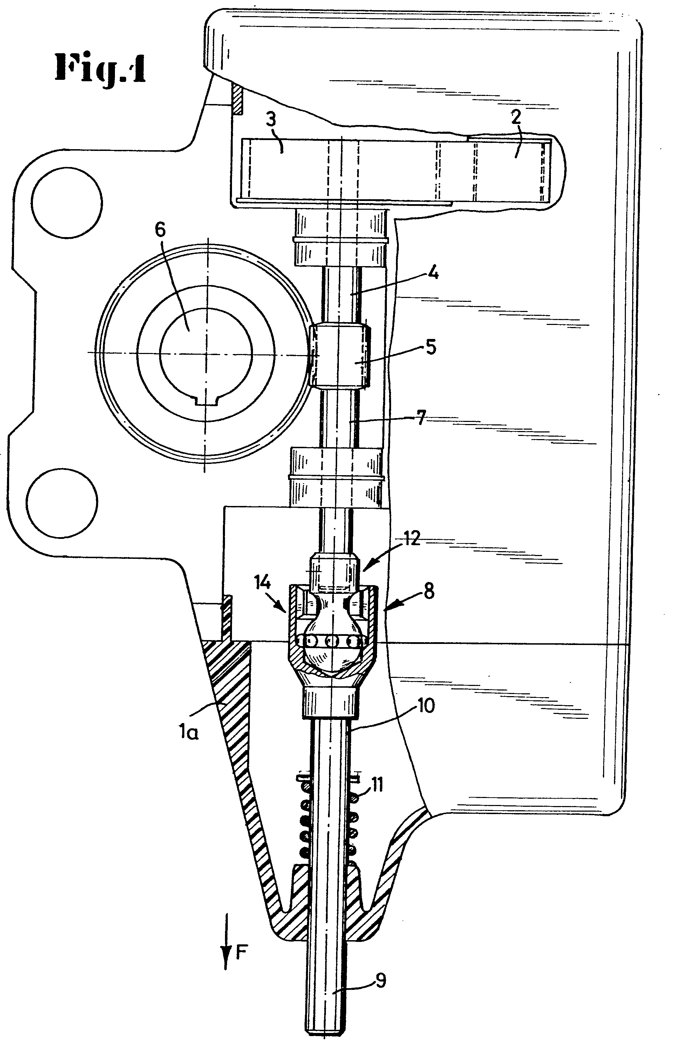

Wenn die Anschlußstelle 9 für die Nothandkurbel in Fig. 1 nach unten in Richtung des Pfeiles F bewegt wird, und zwar gegen die Kraft der Feder 11, bewegt sich auch die äußere Kupplungshälfte 14 nach unten, während die getriebene Welle 7 in ihrer in Fig. 1 dargestellten Lage verbleibt. Hierdurch bewegen sich die Kugeln des Kugellagers 15 in die entsprechenden Ausnehmungen der Innenverzahnung 16 der äußeren Kupplungshälfte 14, wodurch zwangsläufig hinsichtlich Drehbewegungen eine feste Kopplung zwischen den beiden Kupplungshälften 12 und 14 erreicht wird, so daß nunmehr die Arbeitswelle 6 für das zu bewegende Tor oder die Rollade oder das Deckengliedertor antreibbar ist.

Üblicherweise besteht das Gehäuse 1 für den Rolladenantrieb aus Metall. Da in vielen Fällen der Einsatz der Nothandkurbel nicht erforderlich ist, kann die zur Nothandkurbel hingerichtete Seite des Gehäuses beispielsweise durch eine Kunststoffkappe abgedeckt werden. Durch Ausgestalten unterschiedlich geformter Kunststoffkappen besteht die Möglichkeit, bei einheitlicher Serienproduktion des eigentlichen Gehäuses wahlweise dieses Gehäuse mit Nothandkurbel oder ohne zu liefern. Da aber zwischen dem eigentlichen Gehäuse und dem nunmehr aus Kunststoff bestehenden Gehäuseteil 1a unterschiedliche Wärmespannungen auftreten können, könnten auch Bewegungen der treibenden Welle 10 herbeigeführt werden, die zu einem Verkanten im Kupplungsbereich führen können. Solche Verkantungen haben keinen Einfluß auf die Wirksamkeit der Kupplung, da diese den Winkelbewegungen folgen kann, so daß dadurch nicht nur eine einfach aufgebaute, kostengünstig aus Serienbauteilen herstellbare Kupplung geschaffen wird, sondern gleichzeitig Störungen durch Verkantungen vermieden werden.

**Ansprüche**

1. Ein- und ausrückbare Sperrkugelkupplung, insbesondere für Handkurbelgetriebe für motorische Antriebe von Toren, Rolladen oder Deckengliedertoren mit einer gegen Federdruck axial verschiebbaren treibenden Welle (10), mit einer mit der treibenden Well (10) fest verbundenen topfartigen äußeren Kupplungshälfte (14), in die eine mit einer getriebenen Welle (7) drehfest verbundene innere Kupplungshälfte (12) eingeschoben ist, wobei die äußere Kupplungshälfte (14) über einen Teil der axialen Länge ihrer Innenwandung eine Innenverzahung (16) aufweist, in welche in eingerücktem Zustand Kugeln eines mit der inneren Kupplungshälfte (12) axial- und drehfest verbundenen Kugellagers (15) eingreifen und wobei in ausgerücktem Zustand die Kugeln mit einer neben der Innenverzahnung angeordneten zylindrischen Lauffläche (18) der äußeren Kupplungshälfte (14) zusammenwirken, dadurch gekennzeichnet, daß

a) die innere Kupplungshälfte (12) axialfest mit der getriebenen Welle (7) verbunden ist,

b) die Innenverzahnung (16) an der Außenkante (17) der topfartigen Öffnung der äußeren Kupplungshälfte (14) beginnt und die zylindrische Lauffläche (18) sich zwischen dem Ende der Innenverzahnung (16) und dem Boden des Innenraumes der äußeren Kupplungshälfte (14) erstreckt,

c) der Außendurchmesser des mit der getriebenen Welle (7) verbundenen Teiles der inneren Kupplungshälfte (12) zur Ermöglichung einer Winkelbewegung zwischen den Kupplungshälften (12, 14) kleiner ist als der Innendurchmesser der Innenverzahnung (16),

d) der der äußeren Kupplungshälfte (14) zugewandte Teil der inneren Kupplungshälfte (12) kugelförmig ausgebildet ist.

2. Sperrkugelkupplung nach Anspruch 1, dadurch gekennzeichnet, daß die Lauffläche (18) der äußeren Kupplungshälfte (14) auf der der treibenden Welle (10) zugewandten Seite durch einen radial nach innen vorspringenden Absatz begrenzt ist.

3. Sperrkugelkupplung nach Anspruch 1 oder 2, dadurch gekennzeichnet, daß das Auseinanderschieben der Kupplungshälften (12, 14) vor dem Herausgleiten des Kugellagers (15) aus der Innenverzahnung durch einen Anschlag begrenzt ist.

**Claims**

1. Engageable and disengageable detent-ball coupling, especially for crankhandle mechanisms for motor drives of gates, roller blinds or articulated ceiling doors, with a driving shaft (10) axially displaceable against spring pressure, with a pot-like outer coupling half (14) which is connected firmly to the driving shaft (10) and into which is pushed an inner coupling half (12) connected fixedly in terms of rotation to a driven shaft (7), the outer coupling half (14) having over some of the axial length of its inner wall an internal toothing (16) into which, in the engaged state, penetrate balls of a ball-bearing (15) connected fixedly in an axial direction and in terms of rotation to the inner coupling half (12), and, in the disengaged state, the balls interacting with a cylindrical track surface (18) located next to the internal toothing and belonging to the outer coupling half (14), characterised in that

a) the inner coupling half (12) is connected fixedly in an axial direction to the driven shaft (7),

b) the internal toothing (16) starts at the outer edge (17) of the pot-like orifice of the outer coupling half (14), and the cylindrical track surface (18) extends between the end of the internal toothing (16) and the bottom of the interior of the outer coupling half (14),

c) the outside diameter of the part of the inner coupling half (12) connected to the driven shaft (7) is smaller than the inside diameter of the internal toothing (16) to permit an angular movement between the coupling halves (12, 14),

d) the part of the inner coupling half (12) facing the outer coupling half (14) is made spherical.

2. Detent-ball coupling according to claim 1, characterised in that the track surface (18) of the outer coupling half (14) is limited, on the side facing the driving shaft (10), by a step projecting radially inwards.

3. Detent-ball coupling according to claim 1 or 2, characterised in that the pushing of the coupling halves (12, 14) apart from one another, before the ball-bearing (15) slides out of the internal toothing, is limited by a stop.

**Revendications**

1. Accouplement embrayable et débrayable à billes de verrouillage pour mécanisme à manivelle, pour entraînements à moteur de portes, de volets roulants ou de portes à éléments comportant un arbre menant (10) pouvant coulisser axialement contre une pression de ressort, une moitié extérieure d'accouplement (14) en forme de cuvette reliée solidairement à l'arbre menant (10) et dans laquelle est enfoncée une moitié intérieure d'accouplement (12) reliée de façon solidaire en rotation à un arbre mené (7), la moitié extérieure d'accouplement (14) présentant sur une partie de la longueur axiale de sa paroi intérieure une denture intérieure (16) dans laquelle s'engagent, dans l'état embrayé, des billes d'un roulement à billes (15) relié de façon solidaire axialement et en rotation à la moitié intérieure d'accouplement, les billes coopérant, dans l'état débrayé, avec une surface cylindrique de roulement (18) de la moitié extérieure d'accouplement (14), disposée à côté de la denture intérieure, caractérisé par le fait que

a) la moitié intérieure d'accouplement (12) est reliée de façon solidaire axialement à l'arbre mené (7),

b) la denture intérieure (16) commence au bord extérieur (17) de l'ouverture en forme de cuvette de la moitié extérieure d'accouplement (14) et la surface cylindrique de roulement (18) s'étend entre l'extrémité de la denture intérieure (16) et le fond de la cavité intérieure de la moitié extérieure d'accouplement (14),

c) le diamètre extérieur de la partie de la moitié intérieure d'accouplement (12) qui est reliée à l'arbre mené (7) est plus petit que le diamètre intérieur de la denture intérieure (16) afin de permettre un mouvement angulaire entre les moitiés d'accouplement (12, 14).

d) la partie de la moitié intérieure d'accouplement (12) qui est tournée vers la moitié extérieure d'accouplement (14) est de forme sphérique.

2. Accouplement à billes de verrouillage selon la revendication 1, caractérisé par le fait que la surface de roulement (18) de la moitié extérieure d'accouplement (14) est limitée, du côté tourné vers l'arbre menant (10), par un gradin faisant saillie radialement vers l'intérieur.

3. Accouplement à billes de verrouillage selon l'une des revendications 1 et 2, caractérisé par le fait que l'écartement des moitiés d'accouplement (12, 14) par coulissement est limité par une butée avant que le roulement à billes (15) ne glisse hors de la denture intérieure.

Fig.1

0 058 862

Fig.1

# Fig.2